# EUROPEAN PATENT APPLICATION

(11) **EP 1 926 302 A2**
(43) Date of publication of application: **28.05.2008**
(21) Application number: 07254541.1
(22) Date of filing: 22.11.2007
(51) Int. Cl.: H04N 1/405, B41J 2/205

(54) **Control of ink ejection amount based on dot formation order**

(30) Priority: 24.11.2006 JP 2006316975
(71) Applicant: Seiko Epson Corporation, Shinjuku-ku Tokyo 163-0811 (JP)
(72) Inventor: Takahashi, Toru, Suwa-shi Nagano-ken, 392-8502 (JP); Koase, Takashi, Suwa-shi Nagano-ken, 392-8502 (JP); Kakutani, Toshiaki, Suwa-shi Nagano-ken, 392-8502 (JP)
(74) Representative: Webb, Peter Reginald

(57) **Abstract**

The invention provides a printing method of printing on a printing medium. The method includes: performing a halftone process with a dither matrix on image data that represents a tone value of each pixel making up an original image to determine a state of dot formation at each of print pixels of a print image that is to be formed on the printing medium, and generating dot data that represents the determined state of dot formation; and generating a print image by mutually combining each of dot groups that are formed at each of a plurality of pixel groups in a common print region according to the dot data, the plurality of pixel groups being assumed to have different physical conditions with respect to the dot formation. The dither matrix stores each threshold value such that a number of dots to be allocated to each of the plurality of dot groups is determined according to a dot formation order of each of the plurality of dot groups in the common print region in the halftone process.

## Description

### BACKGROUND

### 1. Technical Field

The present invention relates to technology for printing images by forming dots on a printing medium.

### 2. Related Art

As output devices of images created by computers or images taken by digital cameras, printing devices that print images by scanning printing media and thereby forming thereon are widely used. As one of causes of degradation of image quality in such printing devices, aggregation of ink (phenomenon in which inks are clustered together to form dapples) and/or bleed of ink (blurring of ink) occurs. In order to deal with such a cause of degradation of image quality, a variety of methods have conventionally been taken to reduce degradation of image quality, such as improving permeability or other physical properties of ink and creatively using inks with different physical properties, putting restrictions on ink duty, or sorting halftone processed dot data to respective recording scans. Such techniques are disclosed in, for example, JP-A-6-143795, JP-A-7-314656, JP-A-2002-166538, JP-A-6-328678, JP-A-2002-307671, and JP-A-2002-166536.

However, conventionally, no consideration has been given to the idea of reducing aggregation and/or bleed of ink by exercising ingenuity on halftone processing.

### SUMMARY

An advantage of some aspect of the invention is to provide a technique for reducing image deterioration due to the bleed and/or aggregation of inks.

The invention provides a printing method of printing on a printing medium. The method includes: performing a halftone process with a dither matrix on image data that represents a tone value of each pixel making up an original image to determine a state of dot formation at each of print pixels of a print image that is to be formed on the printing medium, and generating dot data that represents the determined state of dot formation; and generating a print image by mutually combining each of dot groups that are formed at each of a plurality of pixel groups in a common print region according to the dot data, the plurality of pixel groups being assumed to have different physical conditions with respect to the dot formation. The dither matrix stores each threshold value such that a number of dots to be allocated to each of the plurality of dot groups is determined according to a dot formation order of each of the plurality of dot groups in the common print region in the halftone process.

According to the printing method of the present invention, state of dot formation is determined by using a specific dither matrix, in which a number of dots to be allocated to each of a plurality of dot groups is determined according to a dot formation order of each of the plurality of dot groups in a common print region. Accordingly, it is possible to determine the number of dots to be allocated to each of the plurality of dot groups and thereby reduce flowage of ink, according to a variety of printing environments such as type of printing medium, characteristic of ink, and the combination thereof. This allows aggregation and/or blurring of ink to be reduced, so that ink density can be increased while image quality of printing is kept high, and therefore the range of color reproduction can be expanded. Note that the expression "different physical conditions with respect to dot formation" indicates different print heads (or nozzle columns) responsible for dot formation, different main scans, and the like.

Note that, in techniques disclosed in JP-A-2005-236768 and JP-A-2005-269527 that employ intermediate data (number data) for specifying state of dot formation, the use of the dither matrix of the present invention has a broader concept that also includes a halftone process employing a conversion table (or a correspondence relationship table) generated using a dither matrix. Such a conversion table is not restricted to the one generated directly from a dither matrix generated by a generation method of the present invention, but may sometimes be adjusted or modified as well, and such cases also fall under the category of the dither matrix generated by the generation method of the present invention.

The present invention may also be reduced to practice by a diversity of forms such as a dither matrix, a dither matrix generation apparatus, and a printing apparatus, a printing method, and a printed matter generation method employing the dither matrix, or by a diversity of forms such as a computer program used to attain functions of such method or apparatus, and recording medium in which such computer program is recorded.

Furthermore, the use of a dither matrix in a printing apparatus, a printing method, or a printed matter generation method permits whether or not a dot is to be formed on a pixel (hereinafter referred to as dot on/off state) to be determined through comparison on a pixel-by-pixel basis of threshold values established in the dither matrix to the tone values of image data; however, it would also be acceptable to determine the dot on/off state by comparing the sum of threshold value and tone value to a fixed value, for example. It would also be acceptable to determine dot on/off state according to tone values, and data created previously on the basis of threshold values, rather than using threshold values directly. Generally speaking, the dither method of the invention may be any method that permits dot on/off state to be determined according the tone values of pixels, and threshold values established at corresponding pixel locations in a dither matrix.

### BRIEF DESCRIPTION OF THE DRAWINGS

**Fig. 1** is a block diagram illustrating one example of the configuration of a printing system.

**Fig. 2** is a schematic illustration of a color printer 20.

**Fig. 3** is an illustration of a nozzle arrangement on the lower face of print heads 10A, 10B.

**Fig. 4** is an illustration showing side surfaces of the print heads 10A, 10B.

**Fig. 5** is an illustration showing the mechanism of a phenomenon referred to as aggregation and/or bleed of ink.

**Fig. 6** is an illustration showing the mechanism of flowing-in of inks of a case where ink droplets are ejected by a preceding head and a succeeding head.

**Fig. 7** shows an illustration depicting conceptually part of the dither matrix M.

**Fig. 8** shows an illustration depicting the concept of dot on/off states using a dither matrix.

**Fig. 9** shows an illustration depicting conceptually exemplary spatial frequency characteristics of threshold values established at pixels in a blue noise dither matrix having blue noise characteristics.

**Fig. 10** shows a conceptual illustration of a visual spatial frequency characteristic VTF (Visual Transfer Function) representing acuity of the human visual faculty with respect to spatial frequency.

**Fig. 11** shows a flowchart showing the processing routine of the dither matrix generation method in the first embodiment.

**Fig. 12** shows an illustration depicting a dither matrix M in the first embodiment.

**Fig. 13** is an illustration showing divided matrices M1, M2 in the first embodiment of the present invention.

**Fig. 14** is an illustration showing a dot number allocation table Dn in the first embodiment of the present invention.

**Fig. 15** is a flowchart showing the processing routine of a storage element determination process in the first embodiment of the present invention.

**Fig. 16** is an illustration using black circles to show dots formed on each of eleven pixels corresponding to each element of a matrix.

**Fig. 17** is an illustration showing a dot density matrix Dda that represents dot density in a quantitative manner.

**Fig. 18** is an illustration showing dot density matrices Dd1, Dd2 that respectively digitize states of dot formation with respect to respective pixel groups, in which a dot corresponding to a candidate storage element and dots corresponding to already determined threshold values have been made on.

**Fig. 19** is an illustration showing an evaluation value calculation formula of the first embodiment of the present embodiment.

**Fig. 20** is an illustration showing an evaluation value calculation formula of a modification of the first embodiment of the present embodiment.

**Fig. 21** is a flowchart showing the processing routine of a method of dither matrix generation in a second embodiment of the present invention.

**Fig. 22** is an illustration showing an evaluation value calculation formula of the second embodiment of the present embodiment.

**Fig. 23** is an illustration showing dot patterns that are formed by using a conventional dither matrix.

**Fig. 24** is an illustration showing dot patterns of a case where neither error of dot formation location nor flowage of ink has been occurred.

**Fig. 25** is an illustration showing dot patterns each of which employing a dither matrix generated by the method of dither matrix generation of the second embodiment of the present invention.

**Fig. 26** is an illustration showing an application to a line printer having four print heads in a first modification.

**Fig. 27** is an illustration showing four divided matrices M21, M22, M23, M24 in the first modification.

**Fig. 28** is an illustration showing a dot number allocation table Dn' in the first modification.

**Fig. 29** is a schematic diagram showing the configuration of a color printer 20a that forms dots while performing main scan of print head and sub-scan of printing medium in a second modification.

**Fig. 30** is an illustration showing how dots are formed by the color printer 20a of the second modification.

### DESCRIPTION OF EXEMPLARY EMBODIMENTS

A. One example of the configuration of a printing system:
Embodiments of the present invention will be described below in the following order, for the purpose of providing a clearer understanding of operations and working effects of the present invention.
   A. One example of the configuration of a printing system:
   B. Method of dither matrix generation in a first embodiment of the present invention:
   C. Method of dither matrix generation in a second embodiment of the present invention:
   D. Modifications:

### A. One example of the configuration of a printing system:

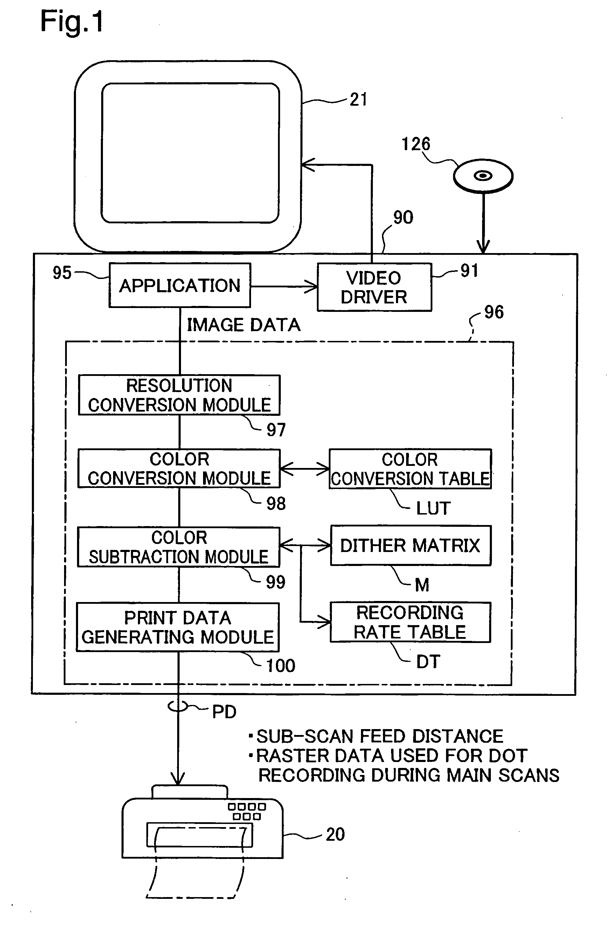

**Fig. 1** is a block diagram illustrating one example of the configuration of a printing system. This printing system is furnished with a computer 90 as a printing control device, and a color printer 20 as a print unit. The color printer 20 and the computer 90 can be termed a "print apparatus" in the broad sense.

On the computer 90, an application program 95 runs on a prescribed operating system. The operating system incorporates a video driver 91 and a printer driver 96; print data PD for transfer to the color printer 20 is output from the application program 95 via these drivers. The application program 95 performs the desired processing of images targeted for processing, as well as outputting images to a CRT 21 via the video driver 91.

Within the printer driver 96 are a resolution conversion module 97 for converting the resolution of an input image to the resolution of the printer; a color conversion module 98 for color conversion from RGB to CMYK; a halftone module 99 that, using an error diffusion method and/or the dither matrices M generated in the embodiments to be discussed later, performs halftone process of input tone values and transform them into output tone values representable by forming dots; a print data generating module 100 that uses the halftone data for the purpose of generating print data to be sent to the color printer 20; a color conversion table LUT serving as a basis for color conversion by the color conversion module 98; and a recording rate table DT for determining recording rates of dots of each size, for the halftone process. The printer driver 96 corresponds to a program for implementing the function of generating the print data PD. The program for implementing the functions of the printer driver 96 is provided in a format recorded on a computer-readable recording medium. Examples of such a recording medium are a CD-ROM 126, flexible disk, magneto-optical disk, IC card, ROM cartridge, punch card, printed matter having a bar code or other symbol imprinted thereon, a computer internal memory device (e.g. RAM, ROM, or other memory) or external memory device, or various other computer-readable media.

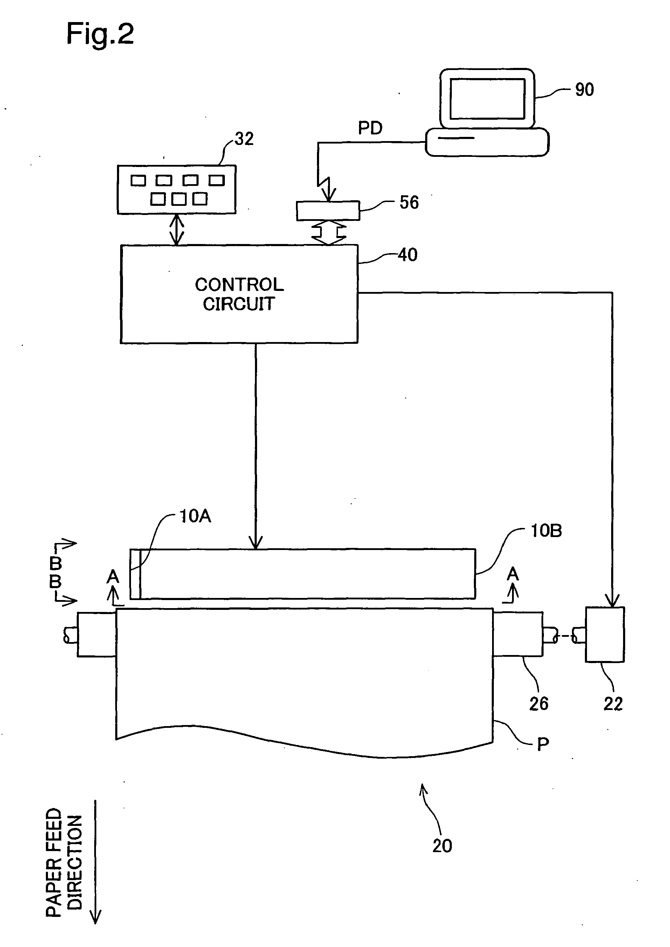

**Fig. 2** is a schematic diagram showing the configuration of the color printer 20. The color printer 20 includes: a sub-scan driving section that transports a printing medium P in a sub-scanning direction by using a paper feed motor 22; a head driving mechanism that drives print heads 10A, 10B to control ink ejection and dot formation; and a control circuit 40 that controls exchange of signals with the paper feed motor 22, a carriage motor 24, a print head unit 60 equipped with the print heads 10A, 10B, and a control panel 32. The control circuit 40 is connected to the computer 90 via a connector 56. Note that no main scan is performed by the print heads 10A, 10B in the color printer 20.

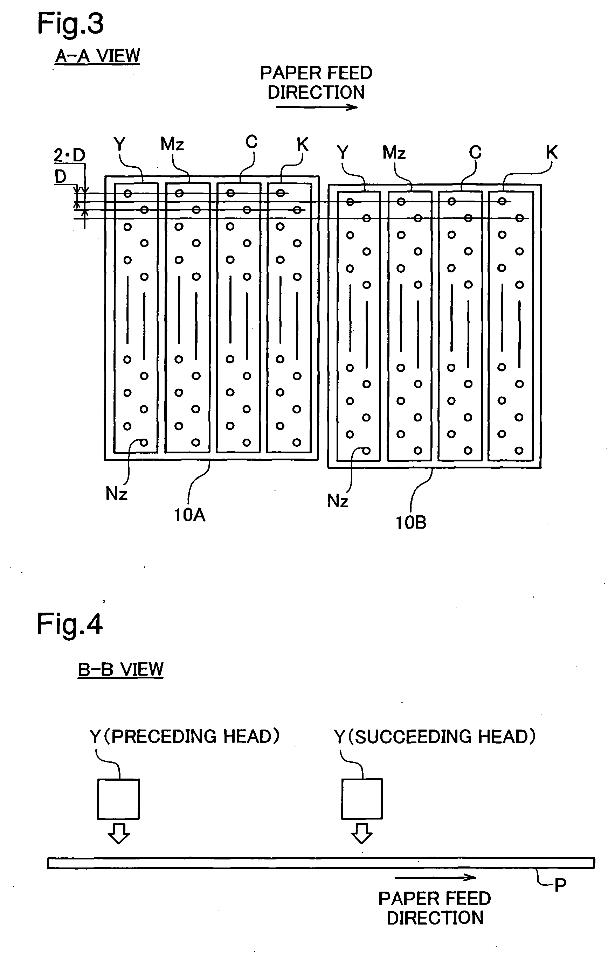

**Fig. 3** is an illustration corresponding to a view along the arrow AA in **Fig. 2** and showing arrangements of nozzles on under surfaces of the print heads 10A, 10B. Formed on each of the under surfaces of the print heads 10A, 10B are a black ink nozzle column K for ejection of black ink, a magenta ink nozzle column Mz for ejection of magenta ink, and a yellow ink nozzle Y for ejection of yellow ink.

The plurality of nozzles contained in each nozzle column are respectively lined up at a constant nozzle pitch k • D, in the sub-scanning direction. Here, k is an integer, and D represents pitch equivalent to the print resolution in the sub-scanning direction (also termed "dot pitch"). This will also be referred to herein as "the nozzle pitch being k dots." The "dot" unit means the dot pitch of the print resolution. Similarly, sub-scan feed distance is also expressed in "dot" units.

In each of the nozzle columns C, Mz, Y, K equipped by each of the two print heads 10A, 10B, the nozzle pitch k is 2. On the other hand, since the two print heads 10A, 10B are disposed at locations shifted from each other by a distance of the nozzle pitch k in a direction perpendicular to the paper feed direction, each color of ink can be ejected on each pixel without dropouts by using the print heads 10A, 10B.

**Fig. 4** is an illustration corresponding to a view along the arrow BB in **Fig. 2** and showing side surfaces of the print heads 10A, 10B. For ease of description, only the nozzle columns used for ejection of yellow ink Y are shown in **Fig. 4**. Since the printing medium P is transferred in the paper feed direction shown by the arrow in **Fig. 4**, there will be ink droplets ejected onto a common print region initially by the print head 10A and subsequently by the print head 10B. As can be seen from **Fig. 3**, the print head 10A and the print head 10B will respectively eject ink droplets on such pixels that are different from each other but are adjacent with respect to one another in the common print region.

In this way, regarding a common print region, a print head that ejects ink droplets beforehand is called a preceding head; whereas a print head that ejects ink droplets afterwards is called a succeeding head. Here, note that a group of plural dots (dot group) formed by the print head 10A and a group of plural dots (dot group) formed by the print head 10B respectively correspond to "each of a plurality of dot groups" in the scope of claim for patent.

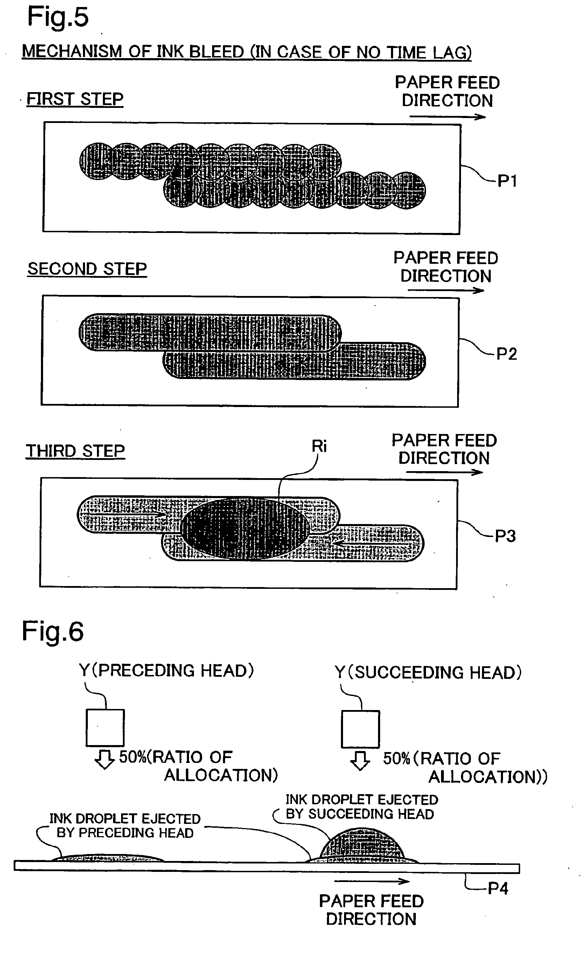

**Fig. 5** is an illustration showing the mechanism of a phenomenon referred to as aggregation and/or bleed of ink. The aggregation and/or bleed of ink occurs roughly in three steps. A first step is a step in which ink droplets are ejected on a plurality of neighboring pixels. In this step, the plurality of ink droplets exist bead-like on a printing medium P. A second step is a step in which the plurality of ink droplets connects with each other. In this step, the inks are connected to form two lines in the paper feed direction and thus are free to move on these lines. A third step is a step in which a puddle of ink is generated. Due to the surface tension of the inks, the inks are clustered at the central region of the two lines and thereby generates a puddle of ink Ri. Such flowing-in of the inks causes aggregation of ink (phenomenon in which inks are clustered together to form dapples) and/or bleed of ink (blurring of ink).

**Fig. 6** is an illustration showing the mechanism of flowing-in of ink of a case where ink droplets are ejected by a preceding head and a succeeding head. The inventors of the present application found out that in case where inks are ejected by a preceding head to form a film of ink droplets on a printing medium P and then a succeeding head is used to eject ink droplets thereon, there may be a phenomenon that the film of ink droplets formed by the preceding head prevents the ink droplets ejected by the succeeding head from permeating into the printing medium P. Based on a solution to such a mechanism, the inventors of the present application further came up with an optimal method of ink droplet ejection that has taken such a phenomenon into account. This invention is to control amounts of ink ejection to be allocated to the preceding head and the succeeding head. That is, the invention allocates a larger amount of ink ejection to the preceding head and allocates commensurately a smaller amount of ink ejection to the succeeding head, thereby reducing flowage of the ink droplets ejected from the succeeding head. Such a physical phenomenon has been proven to become pronounced when pigment is used as the color material and a glossy paper is used as the printing medium. [0052]The present invention is implemented by configurations such as generation, employment, and the like of a dither matrix that is attainable of such allocation.

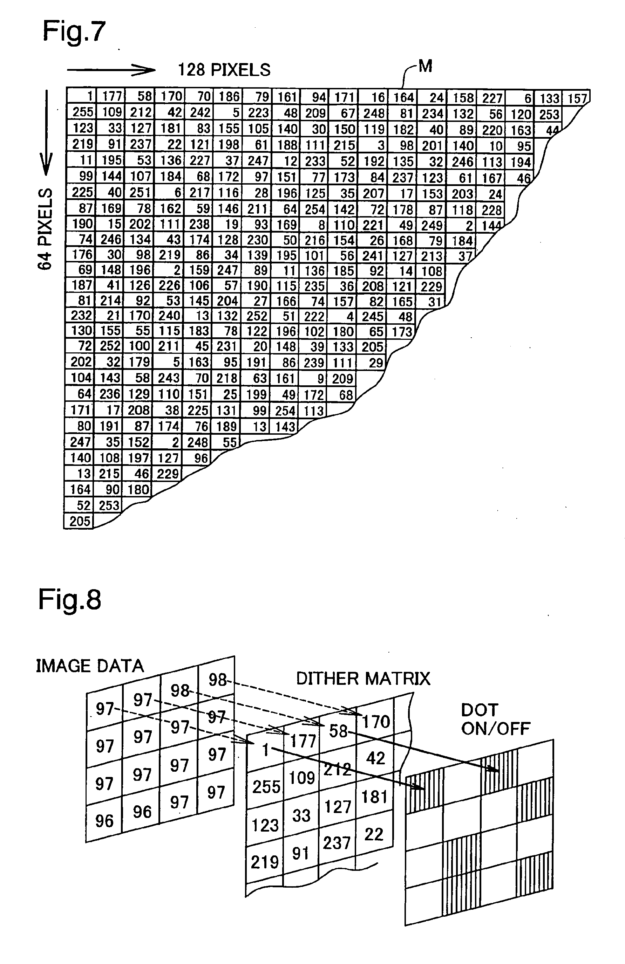

**Fig. 7** is an illustration depicting conceptually part of an exemplary dither matrix M. The illustrated dither matrix contains threshold values selected evenly from a tone value range of 1 to 255, stored in a total of 16384 elements, i.e. 256 elements in the horizontal direction (main scanning direction) and 64 elements in the vertical direction (sub-scanning direction). The size of the dither matrix M is not limited to that shown by way of example in **Fig. 7**; various other sizes are possible, including matrices having identical numbers of horizontal and vertical elements.

**Fig. 8** is an illustration depicting the concept of dot on/off states using a dither matrix. For convenience in illustration, only a portion of the elements are shown. As depicted in **FIG. 8**, when determining dot on-off states, tone values contained in the image data are compared with the threshold values saved at corresponding locations in the dither matrix. In the event that a tone value contained in the image data is greater than the corresponding threshold value stored in the dither table, a dot is formed; if the tone value contained in the image data is smaller, no dot is formed. Pixels shown with hatching in **FIG. 8** signify pixels targeted for dot formation. By using a dither matrix in this way, dot on-off states can be determined on a pixel-by-pixel basis, by a simple process of comparing the tone values of the image data with the threshold values established in the dither matrix, making it possible to carry out the tone number conversion process rapidly. Furthermore, once tone values of the image data have been determined, decisions as to whether or not to form dots on pixels will be made exclusively on the basis of the threshold values established in the matrix, and from this fact it will be apparent that with a systematic dither process it is possible to actively control dot production conditions by means of the threshold value storage locations established in the dither matrix.

As described above, with a systematic dither process it is possible to actively control dot production conditions by means of the storage locations of the threshold values established in the dither matrix. Accordingly, there is a feature that dot dispersion and other image qualities can be controlled by means of adjusting the settings of the threshold value storage locations. This means, subjecting the dither matrix to optimization processing allows for direct control over numbers of dots to be allocated to the preceding head and the succeeding head.

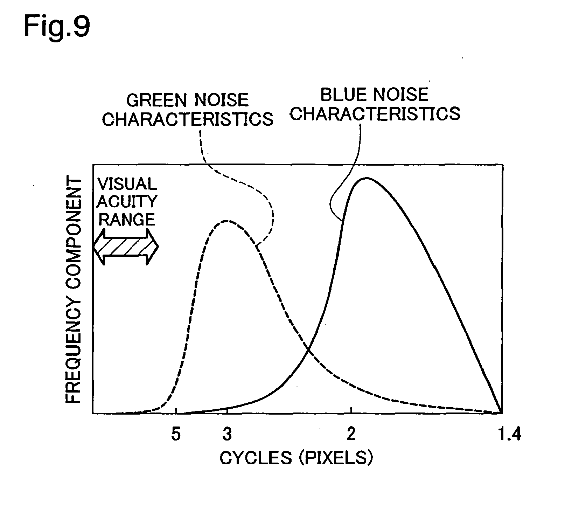

**Fig. 9** is an illustration depicting conceptually exemplary spatial frequency characteristics of threshold values established at pixels in a blue noise dither matrix having blue noise characteristics, by way of a simple example of adjustment of dither matrix. The spatial frequency characteristics of a blue noise dither matrix are characteristics such that the length of one cycle has the largest frequency component in a high frequency region of close to two pixels. These spatial frequency characteristics have been established in consideration of the characteristics of human visual perception. Specifically, a blue noise dither matrix is a dither matrix M in which, in consideration of the fact that human visual acuity is low in the high frequency region, the storage locations of threshold values have been adjusted in such a way that the largest frequency component is produced in the high frequency region.

**Fig. 9** also shows exemplary spatial frequency characteristics of a green noise matrix, indicated by the broken line curve. As illustrated in the drawing, the spatial frequency characteristics of a green noise dither matrix are characteristics such that the length of one cycle has the largest frequency component in an intermediate frequency region of from two to ten or so pixels. Since the threshold values of a green noise dither matrix are established so as to produce these sorts of spatial frequency characteristics, if dot on/off states of pixels are decided while looking up in a dither matrix having green noise characteristics, dots will be formed adjacently in units of several dots, while at the same time the clusters of dots will be formed in a dispersed pattern overall. For printers such as laser printers, with which it is difficult to consistently form fine dots of about one pixel, by means of deciding dot on/off states of pixels through lookup in such a green noise matrix it will be possible to suppress formation of "orphan" dots. As a result, it will be possible to output images of consistently high quality at high speed. In other words, a dither matrix adapted for lookup to decide dot on/off states in a laser printer or similar printer will contain threshold values adjusted so as to have green noise characteristics.

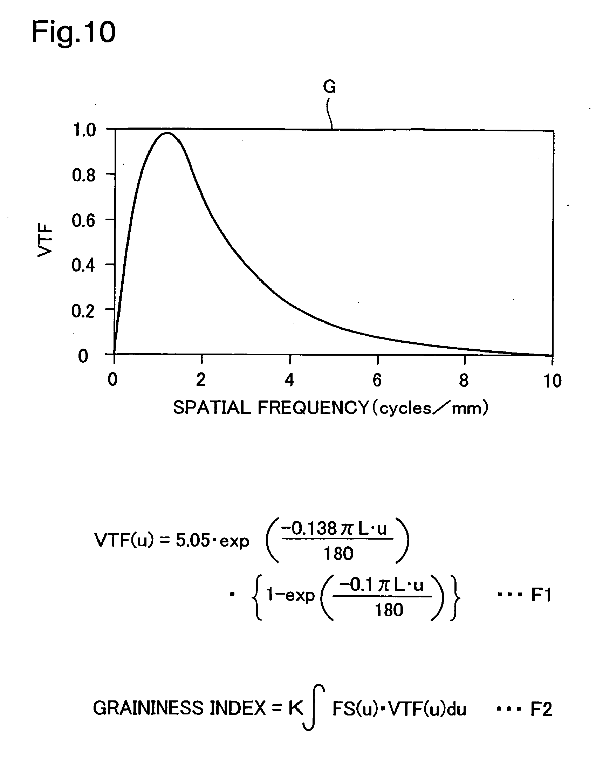

**Fig. 10** shows conceptual illustrations of a visual spatial frequency characteristic VTF (Visual Transfer Function) representing human visual acuity with respect to spatial frequency. Through the use of a visual spatial frequency characteristic VTF it will be possible to quantify the perception of graininess of dots apparent to the human visual faculty following the halftone process, by means of modeling human visual acuity using a transfer function known as a visual spatial frequency characteristic VTF. A value quantified in this manner is referred to as a graininess index. Formula F1 gives a typical experimental equation representing a visual spatial frequency characteristic VTF. In Formula F1 the variable L represents observer distance, and the variable u represents spatial frequency. Formula F2 gives an equation defining a graininess index. In Formula F2 the coefficient K is a coefficient for matching derived values with human acuity.

Such quantification of graininess perception by the human visual faculty makes possible fine-tuned optimization of a dither matrix for the human visual system. Specifically, a Fourier transform can be performed on a dot pattern hypothesized when input tone values have been input to a dither matrix, to arrive at a power spectrum FS; and a graininess evaluation value that can be derived by integrating all input tone values after multiplying the power spectrum FS with the visual spatial frequency characteristic VTF (Formula F2) can be utilized as a evaluation coefficient for the dither matrix. In this example, the aim is to achieve optimization by adjusting threshold value storage locations to minimize the dither matrix evaluation coefficient.

The feature that is common to such dither matrices established in consideration of the characteristics of human visual perception such as the blue noise matrix and the green noise matrix is that, on a printing medium, an average value of components within a specified low frequency range is set small, where the specified low frequency range is a spatial frequency domain within which visual sensitivity of human is at a highest level and ranges from 0.5 cycles per millimeter to 2 cycles per millimeter with a central frequency of 1 cycle per millimeter. For example, the inventors have ascertained that, by configuring a matrix to have such frequency characteristic that the average value of components within the specified low frequency range is smaller than an average value of components within another frequency range, where the another frequency range is a domain within which visual sensitivity of human is reduced to almost zero and ranges from 5 cycles per millimeter to 20 cycles per millimeter with a central frequency of 10 cycles per millimeter, it is possible to reduce granularity in a domain within which visual sensitivity of human is at a high level, thereby effectively improving image quality with a focus on visual sensitivity of human.

### B. Method of dither matrix generation in a first embodiment of the present invention:

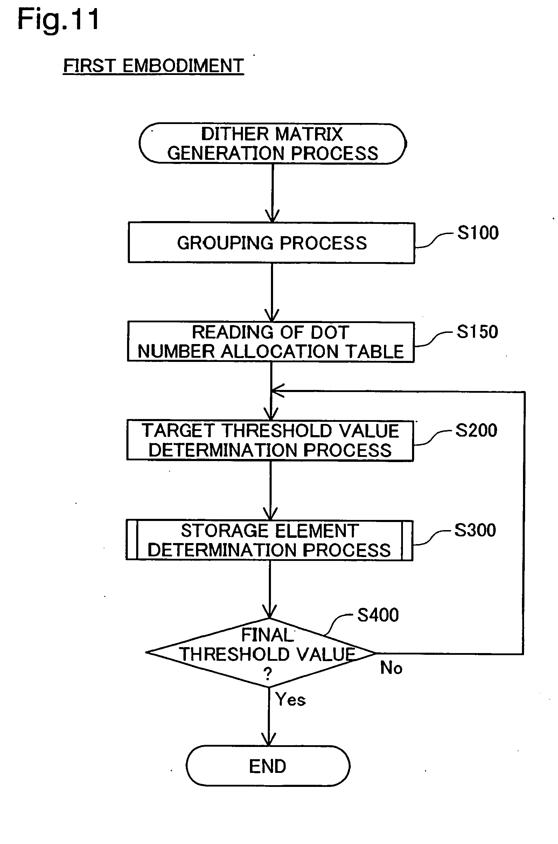

**Fig. 11** is a flowchart showing the processing routine of a method of dither matrix generation in a first embodiment of the present invention. In this embodiment, a small dither matrix of 8 rows and 8 columns is generated for ease of explanation. A graininess index (Formula F2, **Fig. 10**) is used as an evaluation for representing optimality of a dither matrix.

In step S100, a grouping process is performed. The grouping process is a process of dividing a dither matrix M into groups of elements that respectively correspond to a group of pixels (first pixel group) on which dots are formed by the print head 10A (preceding head) and a groups of pixels (second pixel group) on which dots are formed by the print head 10B (succeeding head).

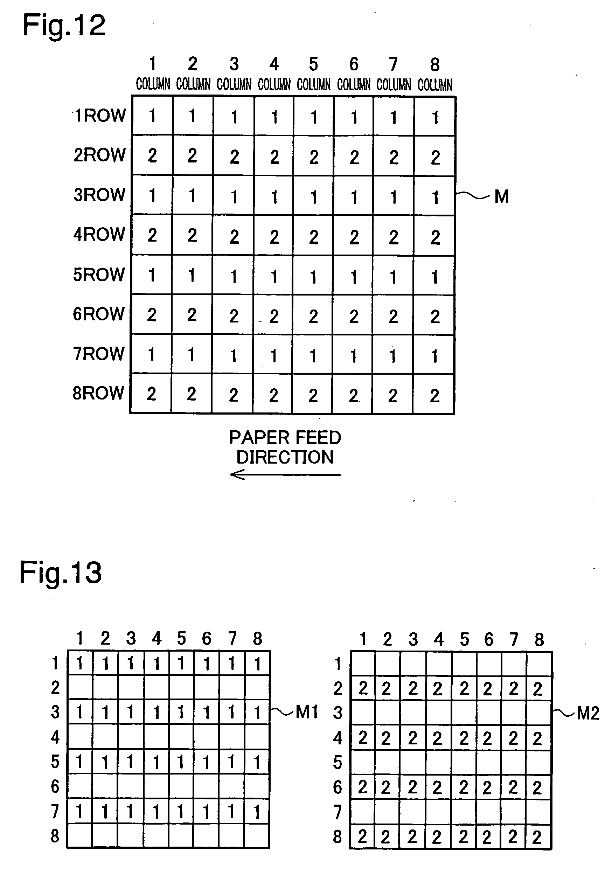

**Fig. 12** is an illustration showing the dither matrix M in the first embodiment of the present invention. Each numeric value stored in each element of the dither matrix M indicates which one of the preceding head and the succeeding head is responsible for dot formation. Each element stored with a numeric value of "1" corresponds to a pixel that the print head 10A (preceding head) is responsible for dot formation; whereas each element stored with a numeric value of "2" corresponds to a pixel that the print head 10B (succeeding head) is responsible for dot formation.

**Fig. 13** is an illustration showing divided matrices M1, M2 in the first embodiment of the present invention. The divided matrix M1 is a matrix obtained by extracting elements for which the print head 10A (preceding head) is responsible for dot formation. The divided matrix M2 is a matrix obtained by extracting elements for which the print head 10B (succeeding head) is responsible for dot formation.

In step S150, a dot number allocation table is read out. The dot number allocation table is a table that represents numbers of dots to be allocated to be formed by the print head 10A (preceding head) and the print head 10B (succeeding head).

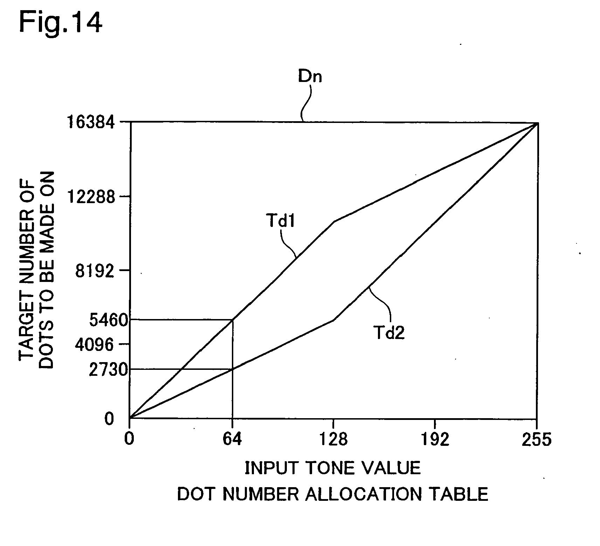

**Fig. 14** is an illustration showing a dot number allocation table Dn in the first embodiment of the present invention. The horizontal and longitudinal axes represents input tone value and target number of dots to be made on, respectively. The curve Td1 represents the relationship between input tone value and target number of dots to be made on with respect to the print head 10A (preceding head); whereas the curve Td2 represents the relationship between input tone value and target number of dots to be made on with respect to the print head 10B (succeeding head). For example, in case of an input tone value of 64, the target number of dots to be made on of the preceding head is 5460, and the target number of dots to be made on of the succeeding head is 2730. The target numbers of dots to be made on are used as criteria for evaluation of a dither matrix in the process of dither matrix generation of the first embodiment of the present invention. Here, the information for representing the numbers of dots to be allocated may be data prepared for every input tone value, or may be an approximate calculation formula.

In step S200, a target threshold value determination process is performed. The target threshold value determination process is a process of determining a threshold value that is targeted for determination of storage element. In the present embodiment, the determination of threshold value is performed by selecting threshold values in ascending order, i.e. in order of decreasing tendency to dot formation. Selecting threshold values in order of decreasing tendency to dot formation allows threshold values to have its storage elements determined in order of decreasing conspicuity of dot graininess i.e. level of highlight of regions for which the threshold values are used to control dot arrangements. It is thus possible to provide greater degrees of design freedom to highlight regions having conspicuous dot graininess.

In step S300, a storage element determination process is performed. The storage element determination process is a process of determining an element for storing the target threshold value. A dither matrix is generated by alternately repeating these target threshold value determination process (step S200) and storage element determination process (step S300). Threshold values to be targeted may be all threshold values, or alternatively be a part of threshold values.

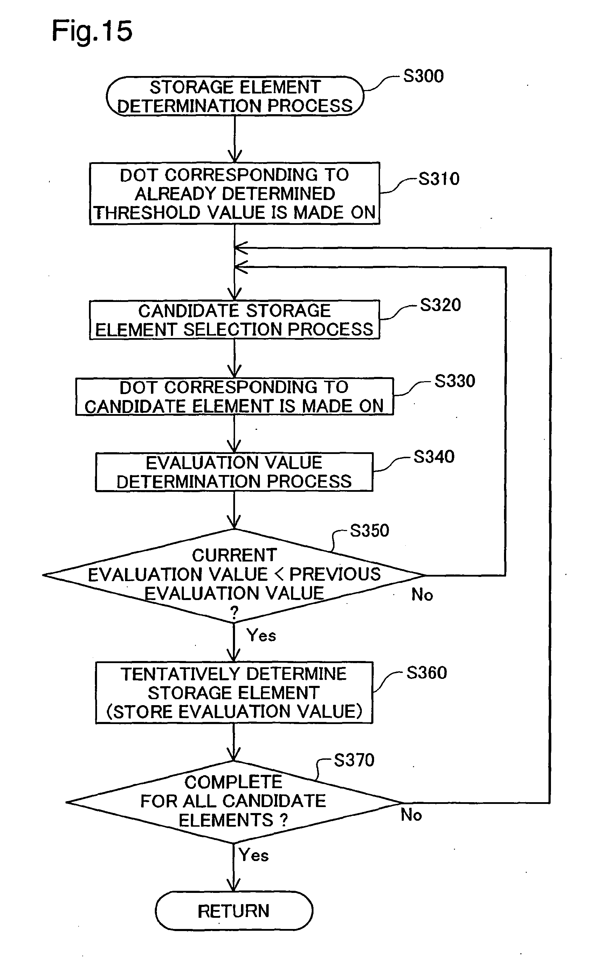

**Fig. 15** is a flowchart showing the processing routine of a storage element determination process in the first embodiment of the present invention. In step S310, each dot that corresponds to an already determined threshold value is made on. The already determined threshold value indicates a threshold value for which a storage element is determined. In the present embodiment, since threshold values are selected in order of decreasing tendency to dot formation as described above, at the time of dot formation in association with a target threshold value, all pixels that correspond to elements storing already determined threshold values will have dots formed thereon. To the contrary, in case where the input tone value is a minimum value that allows for dot formation in association with the target threshold value, any pixel that corresponds to an element other than those storing already determined threshold values will not have any dot formed thereon.

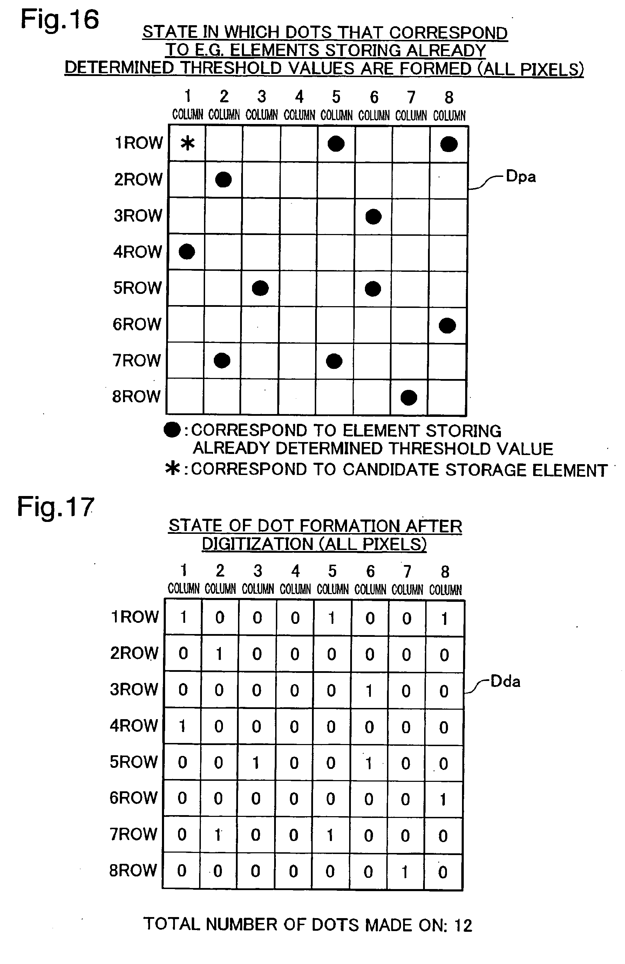

**Fig. 16** is an illustration using black circles to show dots formed on each of eleven pixels corresponding to each element of a matrix that stores threshold values (0 through 10) associated with the first to eleventh greatest tendency to dot formation. A dot pattern Dpa thus configured is used to determine on which pixel a twelfth dot is to be formed. The mark "*" will be described later.

In step S320, a candidate storage element selection process is performed. The candidate storage element selection process is a process of selecting each element other than those for which threshold values to be stored are already determined (in the example of **Fig. 16**, the elements that store threshold values (0 through 10) associated with the first to eleventh greatest tendency to dot formation), as a candidate element for storing the threshold value. In the example of **Fig. 16**, a storage element that is at the first row of the first column and has the mark "*" stored therein is selected as a first candidate element for storing the threshold value.

In step S330, a dot that corresponds to the candidate storage element is made on. The process is performed in such a way that adds the dot to the group of dots that were made on as dots corresponding to the already determined threshold values in step S310.

**Fig. 17** is an illustration depicting a matrix that digitizes a state in which the dot corresponding to the candidate storage element and the dots corresponding to the already determined threshold values have been made on, that is to say, a dot density matrix Dda that represents dot density in a quantitative manner. The numeral "0" indicates no dot has been formed; whereas the numeral "1" indicates a dot has been formed (including the case where a dot is supposed to be formed in the candidate storage element as described above).

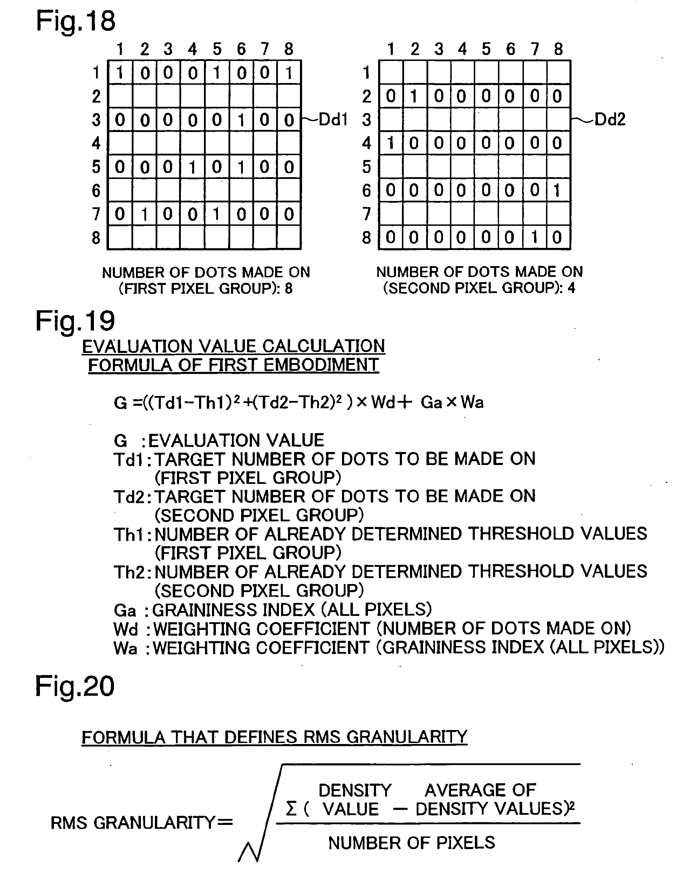

**Fig. 18** is an illustration showing dot density matrices Dd1, Dd2 that respectively digitize states of dot formation with respect to the first pixel group and the second pixel group, in which the dot corresponding to the candidate storage element and the dots corresponding to the already determined threshold values have been made on. As can be seen from **Fig. 18**, the first pixel group have eight dots formed thereon; whereas the second pixel group have four dots formed thereon.

In step S340, an evaluation value determination process is performed. In the present embodiment, the evaluation value determination process is a process of calculating an evaluation value based on an evaluation value calculation formula shown in **Fig. 19**. The evaluation value calculation formula is configured as a sum of a first term that calculates an evaluation value regarding consistency with the target number of dots to be made on (**Fig. 14**) of each pixel group and a second term that calculates a graininess index Ga by using all pixels as the target of evaluation.

The first term calculates a level of consistency with the target number of dots to be made on as a sum of squares of differences between the target numbers of dots to be made on Td1, Td2 read from the dot number allocation table Dn (**Fig. 14**) according to each tone value and the numbers of dots made on (numbers of already determined threshold values Th1, Th2) of each pixel group. For example, in case of an input tone value of 64, the target numbers of dots to be made on of the first and second pixel groups are 5460 and 2730, respectively. Therefore, the closer the numbers of dots made on are to these target numbers of dots to be made on, the smaller the evaluation value of the first term is.

The second term calculates a graininess index Ga by using all pixels as the target of evaluation. In the present embodiment, the graininess index Ga is calculated by using the formulas F1, F2 shown in **Fig. 10**, as an index for representing graininess of image quality. In this way image quality of less graininess can be achieved on the basis of human visual perception. This means, the smaller the graininess index Ga becomes, the more preferable the state is with less graininess.

Here, note that weighting coefficients Wd, Wa are values that represent assignments of weights to the first and second terms, respectively. Specifically, in case where greater importance is given to the consistency with the target numbers of dots to be made on, the weighting coefficient Wd may be made larger; whereas in case where greater importance is given to the graininess, the weighting coefficient Wa may be made larger.

In step S350, the currently calculated evaluation value is compared with a previously calculated evaluation value (stored in buffer not shown). As a result of comparison, if the currently calculated evaluation value is smaller (more preferable), then the calculated evaluation value is stored (updated) in the buffer in association with the candidate storage element, and the current candidate storage element is tentatively determined as the storage element (step S360).

Such a process is performed for every candidate element, and the candidate storage element stored in the buffer in the ending is determined as the storage element (step S370). Furthermore, such a process is performed for every threshold value or for every threshold value within a predetermined range, and the generation of dither matrix is thus complete (step S400, **Fig. 1**).

As described above, in the first embodiment a dither matrix M can be generated that is configured to allocate appropriate numbers of dots to the preceding head and the succeeding head based on the dot number allocation table Dn that stores numbers of dots to be allocated to be formed by the preceding head and numbers of dots to be allocated to be formed by the succeeding head. The use of such a dither matrix allows for direct control over numbers of dots to be allocated to the preceding head and the succeeding head so as to reduce flowage of ink on the printing medium P, thereby attaining printing with improved image quality.

Note that, although the consistency with the target number of dots to be made on is calculated as the evaluation value for optimizing the allocation of numbers of dots in the present embodiment, more simplified method based on the dot number allocation table Dn may be employed as well. For example, in the range of relatively small tone values in the dot number allocation table Dn, the number of dots to be formed on the first pixel group is increased by 2 as the number of dots to be formed on the second pixel group is increased by 1. It is thus possible to exercise ingenuity on the selection order of candidate storage element to successively select two candidates from the first pixel group and select only one candidate from the second pixel group in an alternating manner, so as to generate a dither matrix only through the calculation of graininess index. The same applies to the range of relatively larger tone values only if the first pixel group and the second pixel group are reversed. In this way, adjusting the selection ratio of candidate storage elements can also ensure the consistency with the target number of dots to be made on.

Note that as the evaluation value for representing graininess, not only the graininess index but RMS granularity may be used as well. The RMS granularity is obtained by a process of subjecting the dot density matrix to a low pass filtering process and then calculating its standard deviation. The calculation of RMS granularity can be performed by using, for example, a calculation formula shown in **Fig. 20**.

### C. Method of dither matrix generation in a second embodiment of the present invention:

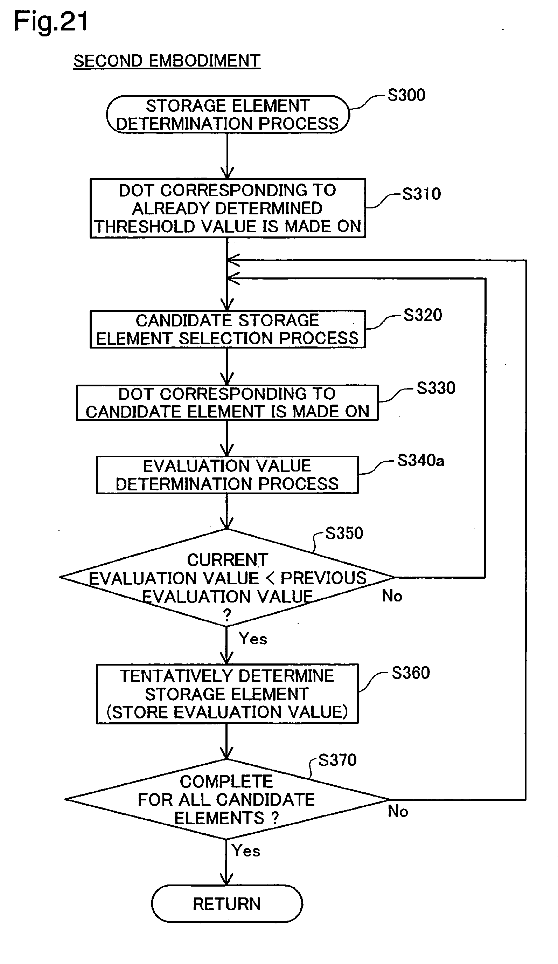

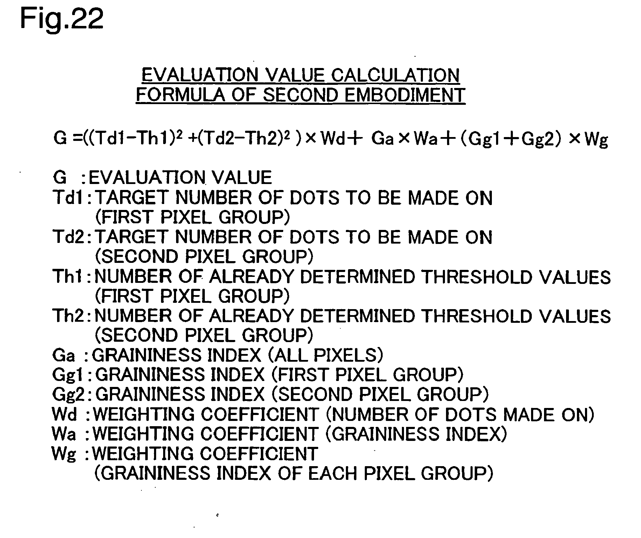

**Fig. 21** is a flowchart showing the processing routine of a method of dither matrix generation in a second embodiment of the present invention. The method of dither matrix generation in a second embodiment is different from the method of dither matrix generation in a first embodiment only in that the evaluation value calculation formula in the evaluation value determination process (step S340) is altered by a calculation formula shown in **Fig. 22** to provide a step S340a.

The calculation formula of the second embodiment (**Fig. 22**) is different from the calculation formula of the first embodiment (**Fig. 19**) in that graininess indices Gg1, Gg2 of the respective pixel groups are added to the evaluation value mentioned above. Here, note that a weighting coefficient Wg is a coefficient for adjusting assignment of weight to the graininess indices Gg1, Gg2 of the respective pixel groups. The graininess indices Gg1, Gg2 of the respective pixel groups are added based on the analysis focused on the relationship between ink flowage mechanism and frequency range.

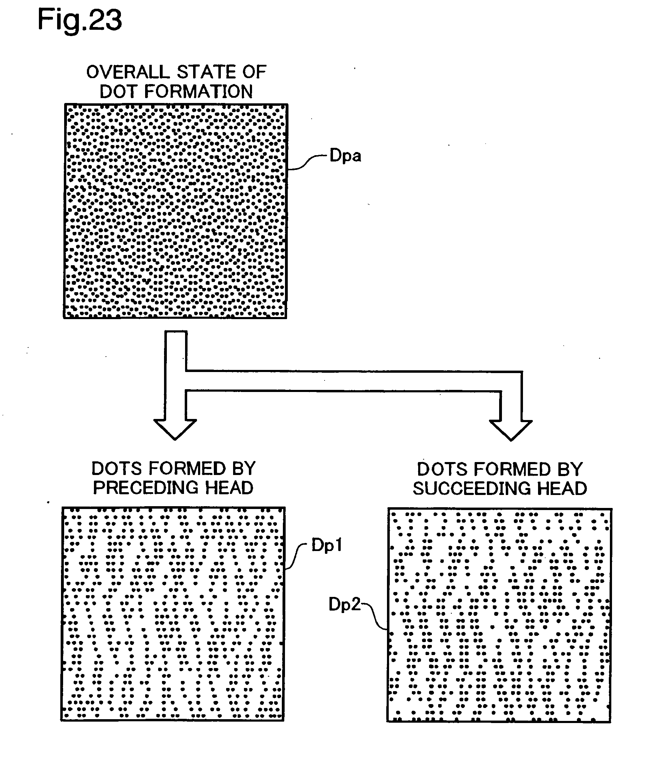

**Fig. 23** is an illustration showing dot patterns that are formed by using a conventional dither matrix. In **Fig. 23**, the three dot patterns Dpa, Dp1, Dp2 represent a dot pattern Dpa of printed image, a dot pattern Dp1 formed by the print head 10A (preceding head), and a dot pattern Dp2 formed by the print head 10B, respectively. The dot pattern Dpa of printed image is formed by combining the dot pattern Dp1 of the first pixel group (hereinafter referred to as "preceding head dot pattern Dp1") and the dot pattern Dp2 of the second pixel group (hereinafter referred to as "succeeding head dot pattern Dp2") in a common print region. Note that, although the same number of dots are allocated for ease of explanation in **Figs. 23** through **25**, the patterns Dp1, Dp2 may have different dot densities from each other depending on the input tone value as described above.

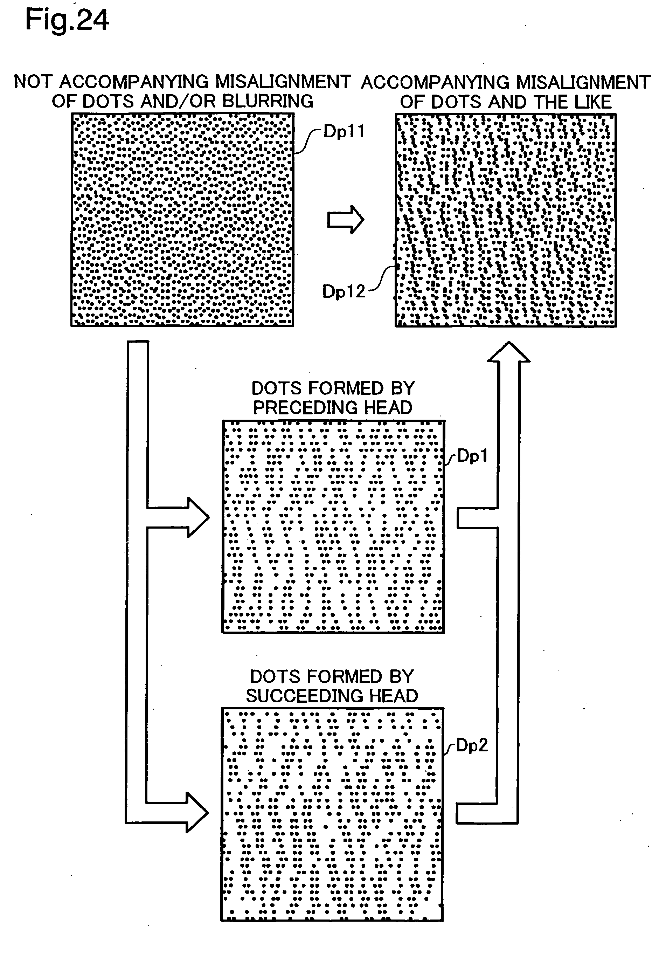

**As** can be seen from **Fig. 23****,** while the dot pattern Dpa of printed image shows relatively uniform dot dispersibility, the preceding head dot pattern Dp1 and the succeeding head dot pattern Dp2 show uneven dot densities. Such unevenness in dot density results in generation of low-frequency components that may be recognized by human eyes as pronounced degradation of image quality. Such degradation of image quality occurs since the conventional dither matrix is configured to improve image quality of the dot pattern Dpa of printed image. However, such degradation of image quality is not expected to be evident if the preceding head dot pattern Dp1 and the succeeding head dot pattern Dp2 can be combined without accompanying any error in dot formation locations as expected previously and also without causing flowage of ink (**Fig. 24**).

However, the generation of low-frequency components in the preceding head dot pattern Dp1 and the succeeding head dot pattern Dp2 will serve to make blurring and/or aggregation of ink due to flowage of ink to become evident in low-frequency ranges within which visual sensitivity of human are at high levels. Furthermore, if the preceding head dot pattern Dp1 and the succeeding head dot pattern Dp2 have different ink densities from each other as described above, then one of the dot patterns will become more conspicuous than the other so that graininess in the low-frequency ranges caused by the one dot pattern will lead to degradation of image quality.

In view of the foregoing, the inventors of the present invention came up with an idea of reducing graininess indices Gg1, Gg2 of respective pixel groups in order to prevent blurring and/or aggregation of ink due to flowage of ink from becoming evident in low-frequency ranges within which visual sensitivity of human are at high levels.

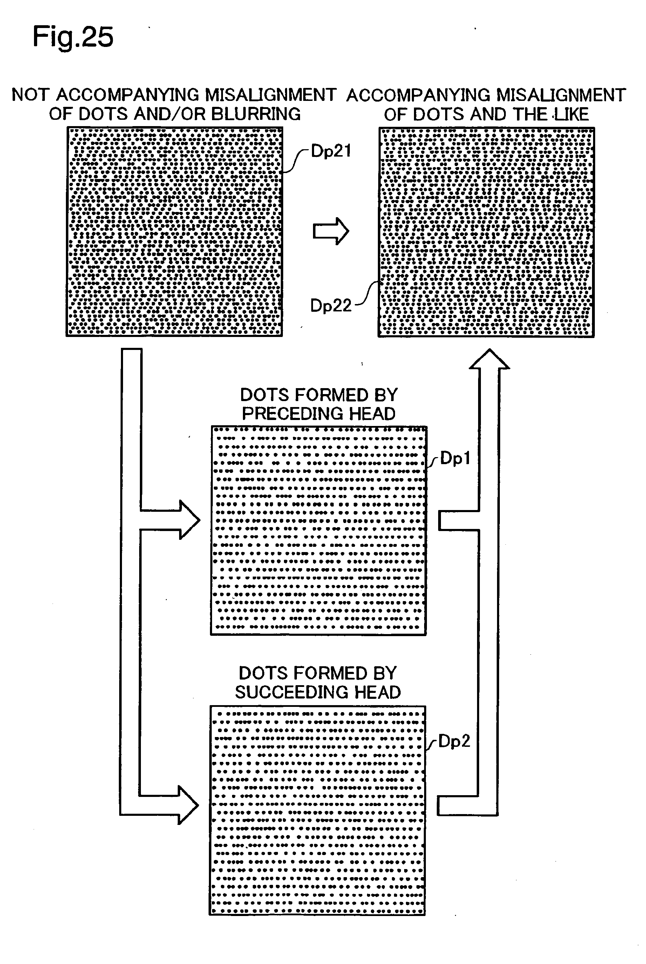

**Fig. 25** is an illustration showing dot patterns each of which employing a dither matrix generated by the method of dither matrix generation of the second embodiment. The use of the dither matrix generated by the method of dither matrix generation of the second embodiment can reduce generation of low-frequency components in the preceding head dot pattern Dp1 and/or the succeeding head dot pattern Dp2. Therefore, even if blurring and/or aggregation of ink is generated by flowage of ink, it can be prevented from becoming evident in the low-frequency ranges. Furthermore, even if dot formation locations by the print head 10A and the print head 10B are deviated relatively from each other, the use of the dither matrix generated by the method of dither matrix generation of the second embodiment also have the effect of restricting excess degradation of image quality from being caused by dense region meets dense region or nondense region meets nondense region.

As above, the second embodiment has an advantage of reducing degradation of image quality that may be caused by the organic relationship between unevenness in low-frequency ranges due to dot patterns respectively generated by the preceding head and the succeeding head and blurring and/or aggregation of ink due to flowage of ink, thereby further improving image quality.

### D. Modifications:

Although the present invention has been described above in terms of several embodiments, the present invention is not restricted to these embodiments, but may be implemented in various modes without departing from the scope of the present invention. For example, the present invention allows for optimization of dither matrix as described in the following modifications.

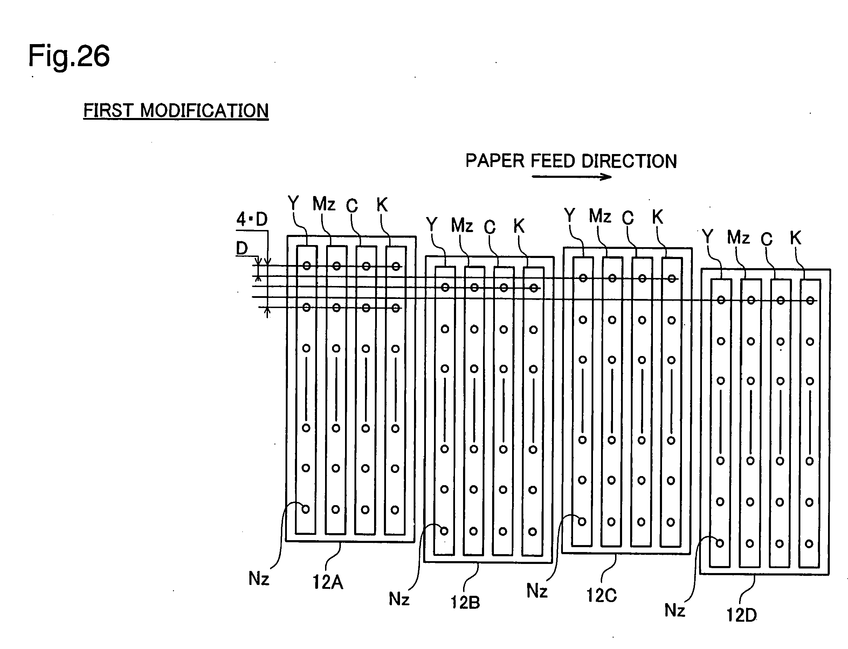

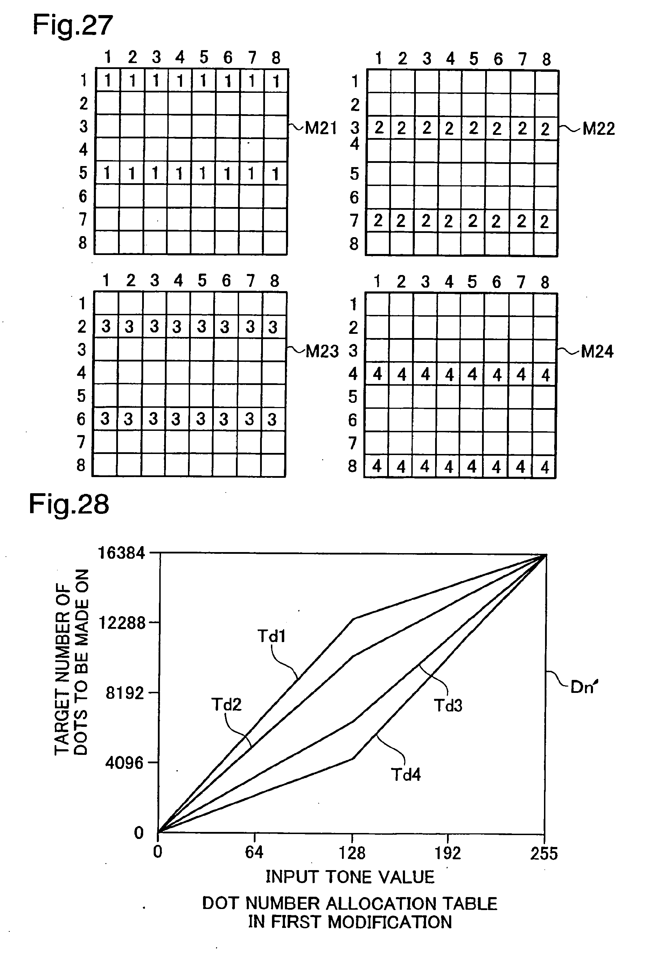

D-1. Although in the above embodiments, the present invention has been disclosed in terms of applications where the printing apparatus employs two print heads; however, the present invention would also be applicable to applications where, for example, four print heads are employed for printing as shown in a first modification (**Fig. 26**). In the first modification, four print heads having a nozzle pitch k of 4 are provided in a zigzag arrangement and are configured to be capable of ejecting ink droplets on respective print pixels. In such a configuration, the present invention can be implemented by dividing the pixels into four pixel groups M21, M22, M23, M24 as shown in **Fig. 27**, and setting numbers of dots to be allocated based on a dot number allocation table Dn' as shown in **Fig. 28**. Furthermore, not that although in this modification and the above embodiments (**Fig. 14**), the numbers of dots to be allocated at each tone value are determined based on information that represents numbers of dots themselves at each tone value, the numbers of dots to be allocated may also be determined based.on information that represents dot occurrence rates (e.g. maximum of 100%, respectively) at each tone value.

D-2. Although in the above embodiments, the present invention is applied to a line printer that performs printing only by means of paper feed; however, the present invention is also applicable to cases where printing is performed by forming dots while performing main scan of print head and sub-scan of printing medium.

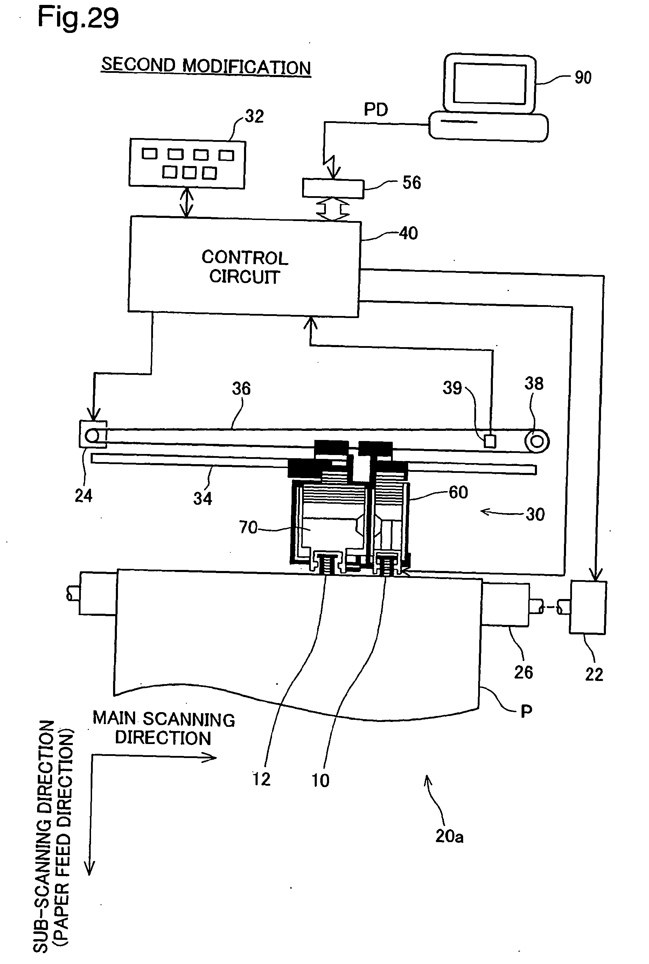

**Fig. 29** is a schematic diagram showing the configuration of a color printer 20a that forms dots while performing main scan of print head and sub-scan of printing medium. In addition to the sub-scan driving section described above (**Fig. 2**), the color printer 20a also includes: a main-scan driving section that drives a carriage 30 to reciprocate in the axial direction (main scanning direction) of a paper feed roller 26 by using a carriage motor 24; and a head driving mechanism that controls ink ejection and dot formation by driving a print head unit 60 (also referred to as "print head assembly") mounted on the carriage 30.

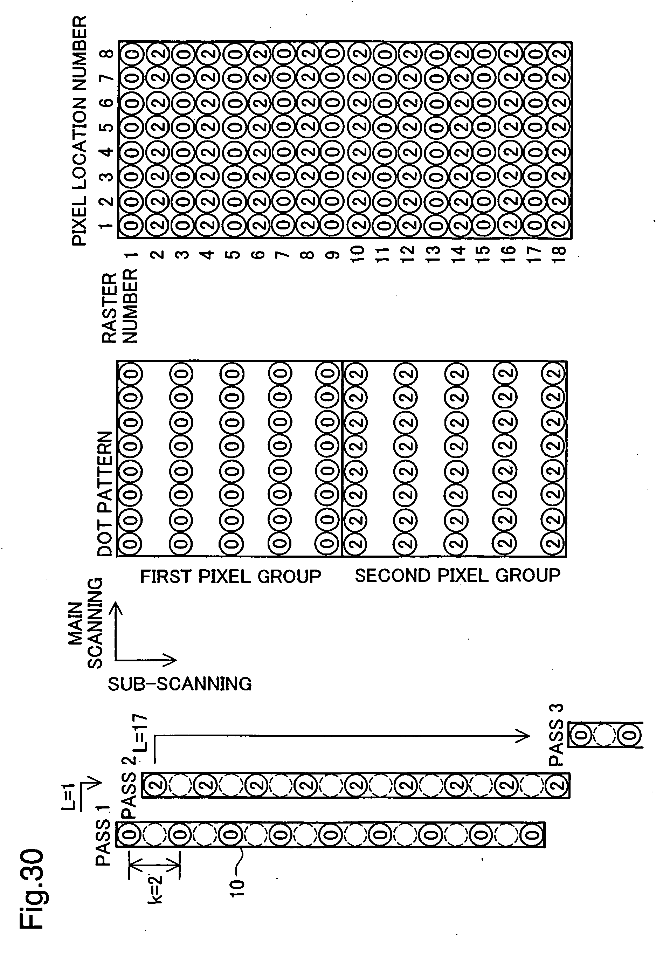

**Fig. 30** is an illustration showing how dots are formed by the color printer 20a. As can be seen from **Fig. 30**, a printed image is generated by forming dots on pixel locations having odd raster numbers and then by forming dots on pixel locations having even raster numbers thereafter. By focusing attention on the point that the printed image is always generated by a preceding odd number main scan and a succeeding even number main scan performed in a common print region, it turns out that the odd number main scan corresponds to the preceding head shown in **Fig. 4** and the even number main scan corresponds to the succeeding head shown in **Fig. 4**. By employing such a correspondence relationship, it is possible to generate a dither matrix in contemplation of numbers of dots to be allocated to respective main scans, as in the first embodiment.

D-3. Although in the above embodiments, the preceding head is set to eject a greater amount of ink than the succeeding head does; however, depending on the printing environment (type of printing medium and/or characteristic of ink), there may also be other cases where flowage of ink can be reduced more in a reversed condition. In general, it is sufficient for the halftone processing of the present invention if it is configured such that state of dot formation is determined by using a specific dither matrix in which a number of dots to be allocated to each of a plurality of dot groups is determined according to a dot formation order of each of the plurality of dot groups in a common print region.

Note that, although using pigment as the color material and a glossy paper as the printing medium has been proven to be the optimum printing environment that makes the effect of setting the amount of ink ejection by the preceding head larger than the amount of ink ejection by the succeeding head prominent ; however, it is also possible to apply the present invention to various printing environments other than this by ascertaining them in experiments performed from the viewpoints described above.

D-4. Although in the above embodiments and modifications, optimality of a dither matrix is evaluated based on graininess index or RMS granularity; however, it would also be acceptable to determine each storage element such that a target threshold value is stored in an element corresponding to a pixel in a region of nondense dot formation (potential method). Furthermore, it would also be acceptable to evaluate optimality of a dither matrix by subjecting dot patterns to Fourier transformation as well as by using a VTF function. Specifically, it would be acceptable to apply an evaluation scale used by Dooley et al. of Xerox Corporation (GS value: Grainess scale) to dot patterns and evaluate optimality of a dither matrix by using the GS value. Here, the GS value is a graininess evaluation value that can be obtained by: digitizing dot patterns by performing a predetermined process including two-dimensional Fourier transformation; performing a filtering process of multiplying them by a visual spatial frequency characteristic VTF; and integrating them thereafter (reference: Fine Imaging and Hardcopy, Corona Publishing Co., Ltd, Japan, edited by The Society of Photographic Science and Technology of Japan, The Imaging Society of Japan, and Committee of Joint Publishing, P534). Note that the former has an advantage of eliminating the need for any complicated calculation such as Fourier transformation.

D-5. Although in the above embodiments, the evaluation process is performed for each storage element for storing a threshold value; however, the present invention would also be applicable to cases where, for example, storage elements for storing a plurality of threshold values are determined simultaneously at one time. Specifically, for example, in case where storage elements for first to sixth threshold values have been determined and storage elements for seventh and eighth threshold values are now to be determined in the above embodiments, storage elements for the seventh and eighth threshold values may be determined based on an evaluation value associated with the time a dot has been added to a storage element for the seventh threshold value and an evaluation value associated with the time dots have respectively been added to storage elements for the seventh and eighth threshold values, or alternatively, only a storage element for the seventh threshold value may be determined.

D-6. In the above embodiments, the dither matrix is generated by determining each target threshold value by: selecting threshold values in ascending order i.e. in order of decreasing tendency to dot formation; and then, based on a matrix evaluation value that represents correlation with a predetermined target state and is calculated based on state of dot formation under the assumption that the target threshold value thus determined is stored in each element, determining a storage element for the target threshold value out of the plurality of candidate storage elements. However, such a method is not restrictive, and it would also be acceptable to select threshold values in descending order. However, the method used in the above embodiments is advantageous in that greater degrees of design freedom can be provided to highlight regions having conspicuous dot graininess.

Furthermore, threshold values are not necessarily determined in sequence, but it would also be acceptable to generate a dither matrix by preparing a dither matrix as initial state, and determining each element for storing each threshold value while replacing a part of a plurality of threshold values stored in respective elements with different threshold value(s) stored in other element(s). In this case, an evaluation function can be established by including difference of dot density formed in each of predetermined element groups into the evaluation function (punishment function). Note that a dot density matrix, which works as a criterion of evaluation, may be generated based on a minimum input tone value that allows the target threshold value to have a dot formed, or alternatively, may be generated based on an input tone value equal to or greater than the minimum input tone value.

Note that within a range of tone values equal to or greater than a predetermined first tone value and equal to or less than a predetermined second tone value, the dither matrix may also be configured such that a number of dots of each of the plurality of dot groups gets closer to each of the numbers of dots to be allocated.

Since there is tendency of ink flowage and conspicuous dot granularity at such tone values, configuring the dither matrix in this way allows for effective reduction of blurring while keeping restraints on granularity of dots.

The dither matrix may also be configured to store each threshold value in each element such that each of the plurality of dot groups has a predetermined common characteristic.

In this way, since blurring and/or aggregation of ink caused by ink flowage occurred in low-frequency ranges can be reduced in each of the plurality of dot groups, so that a prominent effect can be produced. Furthermore, since the preceding head dot pattern Dp1 and the succeeding head dot pattern Dp2 have different ink densities from each other in the present invention, one of the dot patterns will become more conspicuous than the other so that graininess in the low-frequency ranges caused by the one dot pattern will lead to degradation of image quality.

## Claims

1. A printing method of printing on a printing medium, comprising:
performing a halftone process with a dither matrix on image data that represents a tone value of each pixel making up an original image to determine a state of dot formation at each of print pixels of a print image that is to be formed on the printing medium, and generating dot data that represents the determined state of dot formation; and
generating a print image by mutually combining each of dot groups that are formed at each of a plurality of pixel groups in a common print region according to the dot data, the plurality of pixel groups being assumed to have different physical conditions with respect to the dot formation,
wherein the dither matrix stores each threshold value such that a number of dots to be allocated to each of the plurality of dot groups is determined according to a dot formation order of each of the plurality of dot groups in the common print region in the halftone process.

2. The printing method according to claim 1, wherein
the dither matrix is generated by a predetermined dither matrix generation method, and
the predetermined dither matrix generation method includes:
preparing allocation information including information that represents a number of dots to be allocated to each of the pixel groups at each tone value; and
determining threshold values to be stored in an element group corresponding to the pixel group based on the allocation information such that a number of dots to be formed at the pixel group gets closer to the number of dots to be allocated at each tone value.

3. The printing method according to claim 1, wherein
the dither matrix is configured such that the earlier the dot formation order, the greater the number of dots to be allocated to each of the plurality of dot groups.

4. The printing method according to claim 3, wherein
the dither matrix is generated by a predetermined dither matrix generation method, and
the predetermined dither matrix generation method includes:
preparing allocation information including information that represents a number of dots to be allocated to each of the pixel groups at each tone value; and
determining threshold values to be stored in an element group corresponding to the pixel group based on the allocation information such that a number of dots to be formed at the pixel group gets closer to the number of dots to be allocated at each tone value,
wherein the number of dots to be allocated is determined according to an order that each of the plurality of pixel groups is targeted for dot formation in the common print region, such that the earlier the dot formation order, the greater the number of dots to be allocated to each of the plurality of dot groups.

5. The printing method according to any one of claims 2 to 4, wherein
the predetermined dither matrix generation method further includes:
selecting a threshold value for which an element for storage is undetermined and has a greatest tendency to dot formation as a target threshold value, among the plurality of threshold values; and
repeating each of the selecting a threshold value and the determining threshold values, with respect to at least a part of the plurality of threshold values.

6. The printing method according to any one of claims 1 to 5, wherein
the dither matrix is configured to store each threshold value in each element such that each of the plurality of dot groups has a predetermined common characteristic.

7. The printing method according to claim 1, wherein
the common characteristic is a value that is represented by a graininess index calculated by a computing process including a Fourier transformation process, and
the graininess index is calculated based on a product of a VTF function that is determined based on visual spatial frequency characteristic and a constant that is previously calculated by the Fourier transformation process.

8. The printing method according to claim 7, wherein
the common characteristic is a value that is represented by RMS granularity that is calculated by a computing process including a low pass filtering process.

9. The printing method according to any one of claims 1 to 8, further comprising printing by forming the plurality of dot groups on the printing medium while scanning the printing medium.

10. A printing apparatus for printing on a printing medium, comprising:
a dot data generator that performs a halftone process with a dither matrix on image data that represents a tone value of each pixel making up an original image to determine a state of dot formation at each of print pixels of a print image that is to be formed on the printing medium, and generating dot data that represents the determined state of dot formation; and
a print unit that generates a print image by mutually combining each of dot groups that are formed at each of a plurality of pixel groups in a common print region according to the dot data, the plurality of pixel groups being assumed to have different physical conditions with respect to the dot formation,
wherein the dither matrix stores each threshold value such that a number of dots to be allocated to each of the plurality of dot groups is determined according to a dot formation order of each of the plurality of dot groups in the common print region in the halftone process.

11. A method for generating a dither matrix that stores each of a plurality of threshold values in each element, the plurality of threshold values being used for determining state of dot formation to generate a print image according to an input tone value,
wherein the print image is generated by mutually combining each of dot groups formed at each of a plurality of pixel groups in a common print region, the plurality of pixel groups being assumed to have different physical conditions with respect to the dot formation, and
the method comprising determining a storage element of each threshold value such that a number of dots to be formed at each of the plurality of pixel groups gets closer to each number of dots to be allocated, the allocation being previously determined according to a dot formation order of each of the plurality of dot groups in the common print region.
